Europäisches Patentamt

European Patent Office

Office européen des brevets

(11) Publication number: **0 453 038 A1**

# EUROPEAN PATENT APPLICATION

(21) Application number: 91200882.8

(22) Date of filing: 15.04.91

(51) Int. Cl.⁵: **B60K 5/08**, B62D 49/02

(30) Priority: **17.04.90 NL 9000898**

(43) Date of publication of application:
**23.10.91 Bulletin 91/43**

(84) Designated Contracting States:
**DE FR GB IT NL**

(71) Applicant: **C. van der Lely N.V.**
**Weverskade 10 P.O. Box 26**
**NL-3155 ZG Maasland(NL)**

(72) Inventor: **Van der Lely, Cornelis**
**7, Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

(54) **A tractor.**

(57) The invention relates to a tractor (1), which trac-
tor (1) comprises a first engine and a lifting device
(4; 7), which tractor (1) includes a second engine (2)
mounted to a frame (6) which can be coupled to the
lifting device (4; 7) of the tractor (1) by means of
coupling points (18 to 20) provided on the frame (6).
The second engine (2) drives a power take-off shaft
(8). The invention further relates to a frame (6) with
engine (2) connectable to a tractor (1), which frame
(6) includes coupling points (18 to 20) for attaching
the frame (6) to the lifting device (4; 7) of a tractor
(1), whereby the said frame (6) includes further cou-
pling points (21 to 23) for attaching a machine there-
to. The engine (2) drives a power take-off shaft (8).

Fig. 2

The invention relates to a tractor, in particular an agricultural one, which tractor comprises a first engine and a lifting device.

In a tractor of the above-defined type, the engine usually drives the wheels and a power take-off shaft, by means of which power can be conveyed to machines connected to the lifting device of the tractor. If the tractor is not heavy, the tractor might not be able to drive the wheels of the tractor and the machine mounted to the lifting device at the same time.

This need for more power might come up suddenly and during the high season. The problem could be solved by purchasing a much heavier tractor having more engine power, but tractors of this kind are expensive and damage the soil structure due to their large weight.

An object of the invention is to prevent such drawbacks.

To this end, the tractor according to the invention includes a second engine mounted to a frame which can be coupled to the lifting device of the tractor, said frame including coupling points for coupling machines to be driven by the engine to said frame.

In this way there will be a tractor, to which a frame with a second engine can be coupled quickly and effectively and in which the second engine can drive machines to be coupled to said frame at option and, during the high season, the tractor is capable of performing in an advantageous manner many different operations, i.e. with the second engine as well as without it. As the second engine can easily be attached to the tractor and detached from the tractor, using the large engine power derived from two engines, the tractor can easily drive various machines, without the soil structure being damaged by a heavy tractor.

In accordance with a further feature of the invention, the second engine can then be arranged beside the tractor. In particular, the second engine can be arranged beside the first engine, while it can drive a power take-off shaft located substantially centrally in front of the tractor.

The invention further relates to a tractor, in particular an agricultural tractor comprising a first engine and a lifting device, characterized in that a second engine is arranged beside the first engine and drives a power take-off shaft located substantially centrally in front of the tractor.

Furthermore, according to a further feature of the invention, the second engine is arranged behind a front wheel of the tractor. The invention further relates to a tractor, in particular an agricultural tractor comprising a first engine and a lifting device, characterized in that a second engine is arranged near the rear side of a front wheel of the tractor, taken in the direction of operative travel.

In accordance with the invention, the tractor can be provided with a power take-off shaft and a lifting device both at its front end and at its rear end.

In a particular embodiment according to the invention, the tractor comprises a first engine and a lifting device, characterized in that there is arranged a second engine having a frame which includes coupling points for attaching the frame to the three-point lifting device of the tractor, while the frame further includes coupling points, by means of which the three-point coupling of an agricultural machine can be attached to the frame. In this way it is possible to quickly detach the frame from the lifting device at the front side of the tractor and to attach same thereto.

In accordance with a further feature, the frame includes quick coupling points for coupling a machine thereto.

Since the frame together with the second engine can be manufactured as a separate unit and be mounted as such on various types of existing tractors, the invention further relates to a frame with an engine connectable to a tractor, characterized in that the frame includes coupling points for attaching the frame to the lifting device of the tractor, whereby the frame includes further coupling points for attaching a machine to said frame.

In accordance with a further feature of the invention, by means of the frame there can be coupled a second engine to a tractor comprising a first engine, which frame consists of a forwardly extending carrier, at the front end of which there are arranged coupling points for attaching the frame to a lifting device of a tractor. According to the invention, the frame of the engine further includes coupling points, to which the coupling points of a machine can be attached. Therefore, the invention further relates to a frame, by means of which a second engine can be coupled to a tractor comprising a first engine, characterized in that the frame of the second engine includes coupling points for attaching this engine to a three-point lifting device of a tractor, whereby the frame furthermore includes coupling points, to which the coupling points of a machine can be attached, the frame further including a power take-off shaft for driving the machine.

In accordance with a further feature of the invention, the frame supports an engine at its one end, while its other end can be coupled to a tractor. According to a still further feature of the invention, the frame includes an engine which can be coupled to a tractor, while at the frame there is arranged a power take-off shaft, by means of which various machines can be driven by the engine.

In accordance with a further feature of the invention, between the engine and the power take-off shaft there is arranged a clutch which can be operated from the driver's seat of a tractor.

In accordance with a still further feature of the invention, there are provided drive means that partly extend alongside a main carrier, by means of which drive means the power of the engine can be transferred to the power take-off shaft. In accordance with a further feature of the invention, the frame includes a power take-off shaft which is located substantially centrally in front of the tractor and extends in the direction of operative travel. In accordance with a still further feature of the invention, the frame includes two three-point coupling points.

In a preferred embodiment according to the invention, the engine has a power ranging approximately from 40 to 60 kW.

For a better understanding of the invention and to show how the same may be carried into effect, reference will now be made, by way of example, to the accompanying drawings, in which:

Figure 1 is a side view of the tractor having the engine attached to its lifting hitch;

Figure 2 is a plan view of the tractor according to Figure 1, and

Figure 3 is a front view of the tractor according to Figure 1.

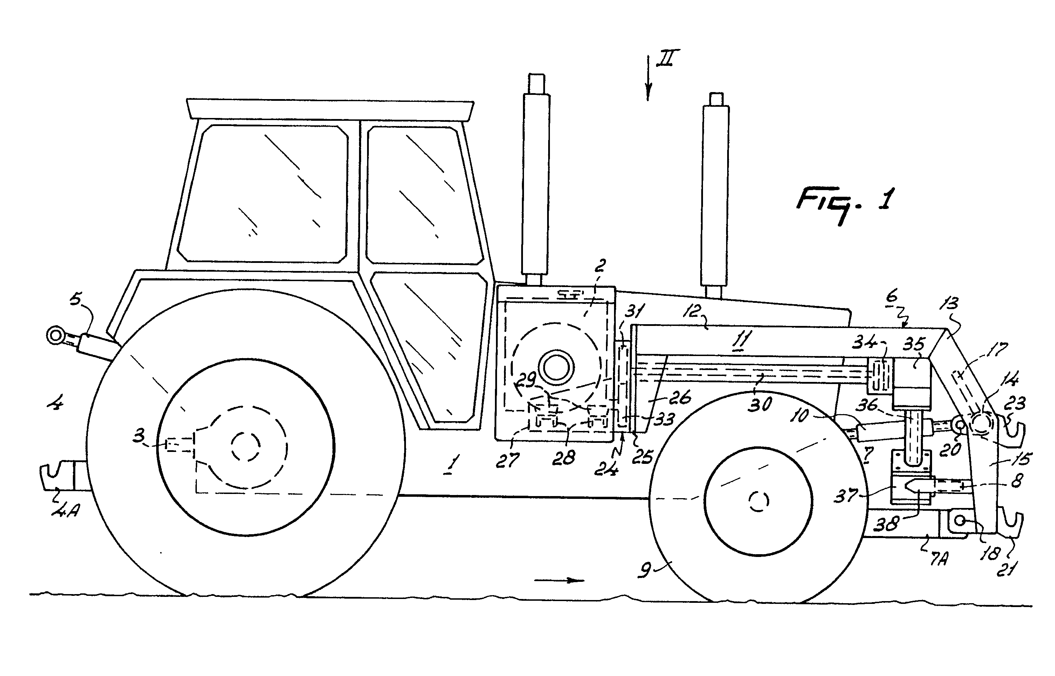

Figure 1 shows in side view a tractor 1 comprising a first engine, drivable wheels, a lifting device and a second engine. At the rear end of the tractor there are provided a power take-off shaft 3 and a lifting device 4 consisting of lifting arms 4A and a top rod 5. The second engine is attached to a frame 6, which frame is coupled to a lifting device 7 at the front end of the tractor.

The first engine provides the drive of the tractor and the second engine 2 provides the drive of a power take-off shaft 8 of the frame 6.

In a preferred embodiment according to Figure 1, the second engine 2 is arranged behind a front wheel 9 and beside the tractor 1. In the relevant embodiment, the second engine 2 is arranged beside the first engine and drives the power take-off shaft 8 located substantially centrally in front of the tractor 1. In the preferred embodiment, the power of the second engine 2 will range approximately from 40 to 60 kW.

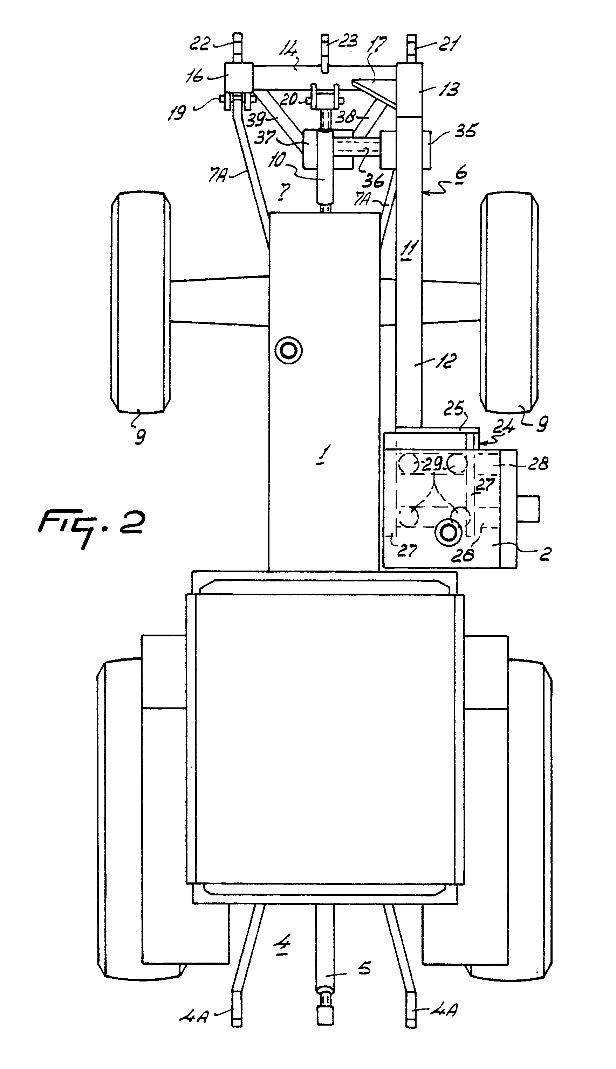

As is shown in Figures 1 and 2, the frame 6 to which the second engine 2 is attached consists of an in the direction of operative travel forwardly extending carrier 11, at the front end of which there are arranged first coupling points 18 to 20 for attaching the frame 6 to the lifting device 7 at the front side of the tractor 1. In the preferred embodiment, the lifting device 7 is a three-point lifting device comprising lifting arms 7A and a top rod 10.

The carrier 11 includes a beam 12, the one end of which is connected at an angle to an intermediate beam 13, squarely to which there is mounted a cross-beam 14 having attached thereto the uprights 15 and 16. It will be obvious that the carrier 11, as defined in the embodiment, may also be designed in a different manner, e.g. in the form of a forwardly and downwardly extending bent tube or as an H-shaped, U-shaped or box-like beam.

Between the cross-beam 14 and the intermediate beam 13 there is fitted an angle bracket 17 to strengthen their connection. The three-point lifting devices 4 and 7 of the tractor 1 are provided in the conventional manner with coupling points, by means of which implements, machines or accessories can be coupled, such as e.g. the frame 6 in Figure 1. The first coupling points 18 to 20 are located on the uprights 15 and 16 and the cross-beam 14, respectively. The first coupling points 18 to 20 can be coupled to the coupling points of the lifting device 4 or 7. The coupling points may be designed as attachment eyes, quick fasteners etc..

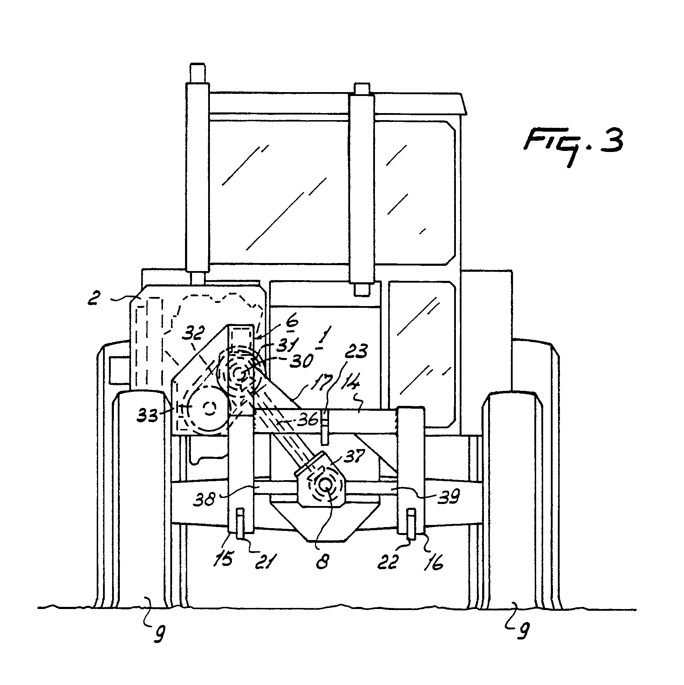

As is apparent from Figures 1, 2 and 3, the carrier 11 also includes second coupling points 21 to 23, which are located at the front side of the uprights 15 and 16 and on the cross-beam 14, respectively, and to which can be connected the coupling points of a machine.

The second engine 2 is mounted at the rear end of the carrier 11. For this purpose, at the rear end of the beam 12 there is arranged a supporting frame 24, to which the second engine 2 is attached capably of being detached. The supporting frame 24 includes a plate 25 which is secured to the beam 12. The connection is strengthened by means of an angle bracket 26. At either side of the plate 25 there is arranged a support 27, 28, which supports are provided with suspension points 29. In this embodiment, the suspension points 29 comprise rubber blocks. It will be obvious that the supporting frame 24 may be designed in different manners, such as e.g. in the form of a squarely bent plate which includes a recess to accommodate the second engine 2 for securing purposes.

As is shown in Figure 1, there are further provided drive means that partly extend alongside the carrier 11, by means of which drive means the power of the second engine can be transferred to the power take-off shaft 8. The drive means are constituted by a first drive shaft 30, the one end of which includes a pulley 31 that via a V-belt 32 is connected to a pulley 33 of the second engine 2, while the other end includes a slip coupling 34 that is connected to a first square-transmission gear box 35. Of course, it is also possible to couple the first drive shaft 30 to the second engine 2 in a different manner, e.g. by means of a gear box, coupling etc..

The drive means furthermore include a second drive shaft 36 that partly extends along the front side of the tractor 1 to as far as substantially the centre thereof. The one end of the second drive shaft 36 is connected to the first square-transmission gear box 35, while the other end is connected to a second square-transmission gear box 37 which comprises the power take-off shaft 8. As is apparent from Figure 2, in order to obtain a rigid suspension of the power take-off shaft 8, it is supported by means of supports 38 and 39 which are attached at the front side of the uprights 15 and 16, respectively, and extend to as far as the second square-transmission gear box 37.

Of course, it is also possible for the frame 6 to be mounted on the lifting device 4 located at the rear side of the tractor 1.

It will be obvious that the frame 6, possibly with the second engine 2, can also be designed as a separate unit.

## Claims

1. A tractor (1), in particular an agricultural tractor comprising a first engine and a lifting device (4; 7), characterized in that there is a second engine (2) mounted to a frame (6) which can be coupled to the lifting device (4; 7) of the tractor (1), which frame (6) includes coupling points (21, 22, 23) for coupling machines to be driven by the engine (2) to said frame (6).

2. A tractor (1) as claimed in claim 1, characterized in that wheels of the tractor can be driven by the first engine, while a power take-off shaft (8) of the tractor (1) can be driven by the second engine (2).

3. A tractor (1) as claimed in claim 1 or 2, characterized in that the frame (6) can be coupled to the lifting device (7) at the front side of the tractor (1), whereby a second engine (2) can drive an in the direction of operative travel extending power take-off shaft (8) at the front side of the tractor (1).

4. A tractor (1) as claimed in claim 1, 2 or 3, characterized in that the second engine (2) is arranged beside the tractor (1).

5. A tractor (1) as claimed in any one of the preceding claims, characterized in that the second engine (2) is arranged beside the first engine, while it drives a power take-off shaft (8) located substantially centrally in front of the tractor (1).

6. A tractor (1), in particular an agricultural tractor comprising a first engine and a lifting device, characterized in that a second engine (2) is arranged beside the first engine in such a way that it can drive a power take-off shaft (8) located substantially centrally in front of the tractor (1).

7. A tractor (1) as claimed in any one of the preceding claims, characterized in that the second engine (2) is arranged near the rear side of a front wheel (9) of the tractor (1).

8. A tractor (1), in particular an agricultural tractor comprising a first engine and a lifting device (4; 7), characterized in that a second engine (2) is arranged near the rear side of a front wheel (9) of the tractor (1), taken in the direction of operative travel.

9. A tractor (1) as claimed in any one of the preceding claims, characterized in that the tractor (1) includes a power take-off shaft and a lifting device (4) at its rear side as well.

10. A tractor (1), in particular an agricultural tractor (1) comprising a first engine and a lifting device (4; 7), characterized in that there is arranged a second engine (2) having a frame (6) which includes coupling points (18, 19, 20) for attaching the frame (6) to the three-point lifting device (4; 7) of the tractor (1), whereby the frame (6) includes coupling points (21, 22, 23), by means of which the three-point coupling points of an agricultural machine can be attached to the frame (6).

11. A tractor (1) as claimed in claim 10, characterized in that the frame (6) includes quick coupling points for coupling a machine thereto.

12. A frame (6) with engine (2) connectable to a tractor (1), characterized in that the frame (6) includes coupling points (18, 19, 20) for attaching the frame (6) to the lifting device (4; 7) of a tractor (1), whereby the frame (6) includes further coupling points (21, 22, 23) for attaching a machine to said frame (6).

13. A frame (6) as claimed in claim 12, characterized in that by means of the frame (6) there can be coupled a second engine (2) to a tractor (1) comprising a first engine, which frame (6) consists of an in the direction of operative travel forwardly extending carrier (11), at the front end of which there are arranged coupling points (18, 19, 20) for attaching the frame (6) to a lifting device (7) of the tractor (1).

14. A frame (6) as claimed in either claim 12 or 13, characterized in that the frame (6) of the engine (2) furthermore includes coupling points (21, 22, 23), to which the coupling points of a machine can be attached.

15. A frame (6) with engine (2), by means of which a second engine (2) can be coupled to a tractor (1) comprising a first engine, characterized in that the frame (6) of the second engine (2) includes coupling points (18, 19, 20) for attaching this engine (2) to a three-point lifting device (4; 7) of a tractor (1), whereby the said frame (6) includes coupling points (21, 22, 23), to which the coupling points of a machine can be attached, while the frame (6) includes a power take-off shaft (8) for driving the machine.

16. A frame (6) as claimed in one or more of the claims 12 to 15, characterized in that the frame (6) supports an engine (2) at its one end, while its other end can be coupled to a tractor (1).

17. A frame (6) as claimed in one or more of the claims 12 to 16, characterized in that the frame (6) includes an engine (2) which can be coupled to a tractor (1), whereby at the said frame (6) there is arranged a power take-off shaft (8), by means of which various machines can be driven by the engine (2).

18. A frame (6) as claimed in one or more of the claims 12 to 17, characterized in that between the engine (2) and the power take-off shaft (8) there is arranged a clutch which can be operated from the driver's seat of a tractor (1).

19. A frame (6) as claimed in one or more of the claims 12 to 18, characterized in that there are provided drive means (30) that partly extend alongside a main carrier (11), by means of which drive means (30) the power of the engine can be transferred to the power take-off shaft (8).

20. A frame (6) as claimed in one or more of the claims 12 to 19, characterized in that the frame (6) includes, during operation, a power take-off shaft (8) which is located substantially centrally in front of the tractor (1) and extends in the direction of operative travel.

21. A frame (6) as claimed in one or more of the claims 12 to 20, characterized in that the frame (8) includes two three-point coupling points (18 to 23).

22. A frame (6) as claimed in one or more of the claims 12 to 21, characterized in that the engine (2) has a power ranging approximately from 40 to 60 kW.

FIG. 1

EP 0 453 038 A1

FIG. 2

FIG.3

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 439 710  (WILDNER)<br>* Claims; figures *<br>– – – | 1-3 | B 60 K 5/08<br>B 62 D 49/02 |
| X | FR-A-2 552 616  (VAN DER LELY)<br>* Claims; figures *<br>– – – | 1-3 | |
| A | DE-A-3 608 335  (TEXAS INDUSTRIES)<br>* Claims; figures *<br>– – – | 1 | |
| A | EP-A-0 182 437  (VAN DER LELY)<br>* Claims; figures *<br>– – – – – | 1 | |

| | |
|---|---|
| | TECHNICAL FIELDS SEARCHED (Int. Cl.5) |
| | B 60 K<br>B 62 D |

The present search report has been drawn up for all claims

| Place of search | Date of completion of search | Examiner |
|---|---|---|
| The Hague | 24 July 91 | PIRIOU J.C. |